# FASCICULE DE BREVET EUROPEEN

(11) **EP 1 559 832 B1**
(45) Date de publication et mention de la délivrance du brevet: **12.11.2014**
(21) Numéro de dépôt: 05290052.9
(22) Date de dépôt: 10.01.2005
(51) Int. Cl.: D21H 21/48, G06K 19/077

(54) **Procédé d'insertion de puces électroniques dans une feuille de matière fibreuse.**
Verfahren zum einsetzen von chips in eine faserbahn
Process for insertion of chips into a fibrous web

(30) Priorité: 19.01.2004 FR 0400456
(43) Date de publication de la demande: 03.08.2005
(73) Titulaire: BANQUE DE FRANCE, 75001 Paris (FR)
(72) Inventeur: Beauchet, Frédéric, 63110 Beaumont (FR)
(74) Mandataire: Fruchard, Guy

(56) Documents cités:
- EP-A- 1 148 440
- WO-A-2004/050991
- FR-A- 2 827 986
- DATABASE WPI Section Ch, Week 199347 Thomson Scientific, London, GB; Class F09, AN 1993-375531 XP002295342 & KR 9 303 371 B (KOREA MINT CORP) 26 avril 1993 (1993-04-26)

## Description

La présente invention concerne un procédé d'insertion de puces électroniques dans une feuille de matière fibreuse.

### ARRIERE PLAN DE L'INVENTION.

On sait que pour l'authentification d'un article il est de plus en plus courant de lui associer une puce électronique, qu'il s'agisse d'une simple puce à mémoire permettant de stocker des données relatives à l'article considéré, ou d'une puce à microprocesseur permettant d'effectuer des contrôles plus sophistiqués.

En particulier il est connu d'insérer des puces électroniques dans une feuille de matière fibreuse. Cette insertion pose toutefois des problèmes particuliers lorsque l'épaisseur de la puce est non négligeable par rapport à l'épaisseur de la feuille notamment dans le cas d'une feuille de papier destinée à la réalisation de billets de banque. Dans ce cas il est en effet difficile de réaliser l'insertion des puces électroniques sans réaliser une surépaisseur à l'emplacement d'une puce électronique, tout en maintenant la puce électronique de façon sûre dans la feuille de papier.

On connaît du document FR-A-2 827 986 un procédé d'insertion de puces électroniques dans une feuille de matière fibreuse consistant à fixer les puces électroniques sur un ruban qui est inséré dans la feuille lors de la fabrication de celle-ci et plus particulièrement lors de la réalisation de l'étape initiale de formation d'une couche fibreuse humide à partir d'un bain de fibres en suspension dans un liquide. A cet effet, le ruban portant les puces électroniques est immergé dans le bain de façon à être immédiatement adjacent à une forme poreuse agissant comme un filtre sur lequel les fibres se déposent lors du passage du liquide à travers la paroi de la forme. La réduction locale de porosité résultant de la présence du ruban porteur des puces électroniques perturbe le dépôt des fibres à l'emplacement du ruban porteur de sorte que pour des papiers de faible épaisseur comme les billets de banque, il existe un risque que le dépôt de fibres soit insuffisant à l'emplacement du ruban porteur des fibres électroniques. Après rinçage et séchage de la couche fibreuse il existe donc un risque que le ruban porteur et les puces électroniques qui lui sont associées soient mal fixés dans la feuille de papier, ce qui rend celle-ci impropre à son utilisation. Ce risque est particulièrement important lorsque le ruban porteur est large en particulier dans le cas où la puce est associée à une antenne réalisée sur le ruban porteur.

### OBJET DE L'INVENTION

Le but de l'invention est de proposer un procédé et des moyens de mise en oeuvre de ce procédé permettant une insertion de puces électroniques dans une feuille de matière fibreuse mince en minimisant les surépaisseurs et tout en assurant un maintien approprié des puces électroniques à l'intérieur de la feuille.

### BREVE DESCRIPTION DE L'INVENTION

En vue de la réalisation de ce but on propose selon l'invention un procédé d'insertion de puces électroniques dans une feuille de matière fibreuse, ce procédé comportant une étape de formation d'au moins une première couche fibreuse humide à partir d'un bain de fibres en suspension dans un liquide, une étape de pose des puces électroniques sur la première couche fibreuse humide après formation complète de celle-ci, et des étapes de finalisation de la feuille.

Ainsi par une pose des puces électroniques sur une couche fibreuse humide après formation complète de celle-ci on s'assure que la quantité de fibres nécessaires pour maintenir la puce électronique est convenablement mise en place. En outre la couche fibreuse étant encore dans un état humide (environ 90% d'eau)la puce électronique s'insère aisément entre les fibres au moment de sa pose.

Selon une version avantageuse de l'invention la puce électronique est enfoncée dans la première couche fibreuse lors de l'étape de pose. Ainsi on s'assure que la puce électronique est immédiatement maintenue par les fibres de la première couche fibreuse.

Selon un autre aspect avantageux de l'invention le procédé comporte en outre une étape de recouvrement de la première couche fibreuse humide par une seconde couche fibreuse humide après la pose de la puce électronique et avant les étapes de finalisation. Ainsi les puces électroniques sont totalement entourées par les fibres avant les étapes de finalisation de sorte que lors de ces étapes les puces électroniques sont fermement maintenues par la masse des fibres.

### BREVE DESCRIPTION DES DESSINS.

D'autres caractéristiques et avantages de l'invention apparaîtront à la lecture de la description qui suit de plusieurs modes mises en oeuvre du procédé selon l'invention en référence aux figures ci-jointes parmi lesquelles :
La figure 1 est une vue schématique de côté, selon la flèche I de la figure 2, d'une installation selon un premier mode de mise en oeuvre du procédé selon l'invention.
La figure 2 est une vue en coupe agrandie selon la ligne II-II de la figure 1.
La figure 3 est une vue en coupe partielle agrandie, selon la ligne III-III de la figure 1, du dispositif de pose juste avant la pose d'une puce électronique.
La figure 4 est une vue analogue à celle de la figure 3 au moment de la pose d'une puce électronique.
La figure 5 est une vue en coupe partielle analogue à celle de la figure 2 d'un second mode de mise en oeuvre du procédé selon l'invention.
La figure 6 est une vue en coupe partielle agrandie analogue à celle de la figure 2 d'un troisième mode de mise en oeuvre du procédé selon l'invention.

Sur toutes ces figures les épaisseurs relatives des couches ont été volontairement faussées pour une meilleure compréhension de l'invention.

### DESCRIPTION DETAILLEE DE L'INVENTION

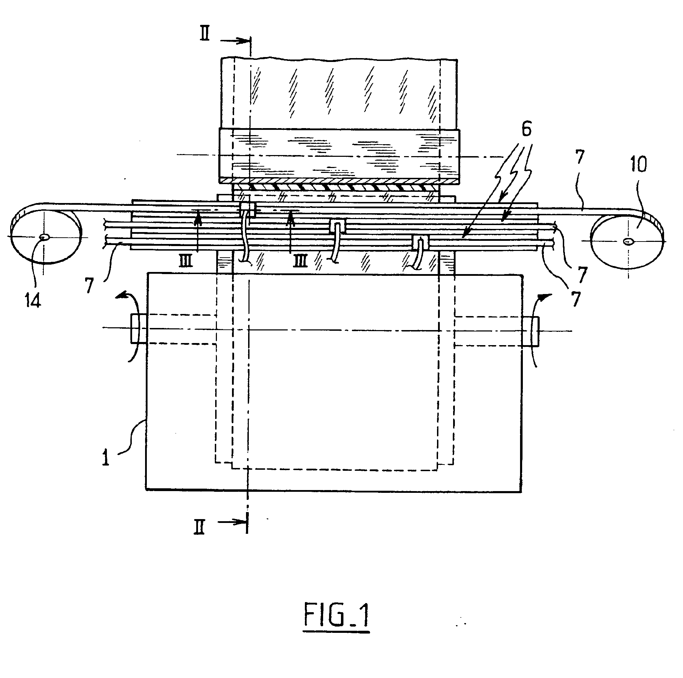

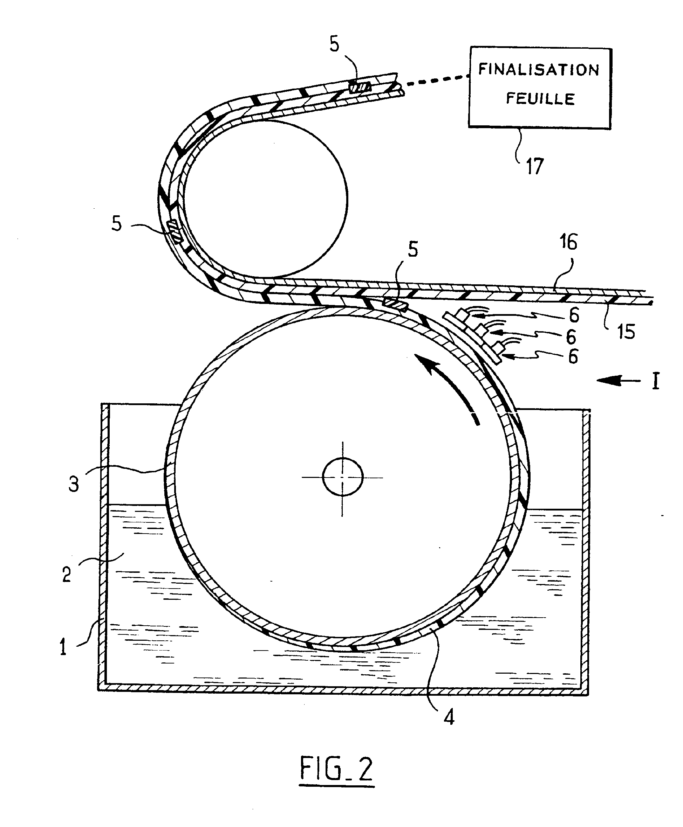

En référence aux figures 1 et 2, l'installation illustrée comporte de façon connue en soi une cuve 1 contenant un bain 2 de fibres en suspension dans un liquide. Une forme cylindrique 3 à paroi poreuse est montée pour tourner dans la cuve 1 en étant partiellement immergée dans le bain de fibres. Sous l'effet de la différence de pression entre l'intérieur et l'extérieur de la forme 3, le liquide passe à travers la paroi de la forme 3 vers l'intérieur de celle-ci et les fibres contenues dans le liquide se déposent progressivement selon une couche fibreuse humide 4 qui est extraite du bain lors de la rotation de la forme 3.

Selon l'invention l'installation comporte un dispositif de pose de puces électroniques 5 sur la couche fibreuse humide 4 après une formation complète de celle-ci mais avant les étapes de finalisation de la feuille telles que le pressage et le séchage.

Selon le mode de réalisation illustré par les figures 1 à 4, le dispositif de pose de puces électroniques comporte trois organes de pose 6 permettant de déposer des puces électroniques en trois points différents de la couche fibreuse humide 4. En pratique une installation réelle comporte un nombre d'organes de pose qui dépend de la largeur de la feuille de papier servant ensuite à la fabrication de billets de banque découpés à partir de la feuille selon un nombre de colonnes correspondant aux nombres d'organes de pose.

Dans ce mode de réalisation les puces 5 sont initialement encapsulées dans une bande porteuse 7 comprenant des alvéoles 8 dans lesquelles sont disposées les puces électroniques 5. Chaque alvéole 8 débouche sur une face de la bande porteuse 7 selon une ouverture d'éjection ayant une dimension appropriée permettant le passage d'une puce 5. Chaque alvéole 8 comporte en outre sur la face opposée un orifice de contrôle de position 9 dont l'utilité sera vue plus loin. Lors du conditionnement des puces 5 dans les alvéoles 8 de la bande porteuse 7 les ouvertures d'éjection sont de préférence fermées par une bande détachable non représentée et la bande porteuse 7 est enroulée sur elle-même selon une bobine 10.

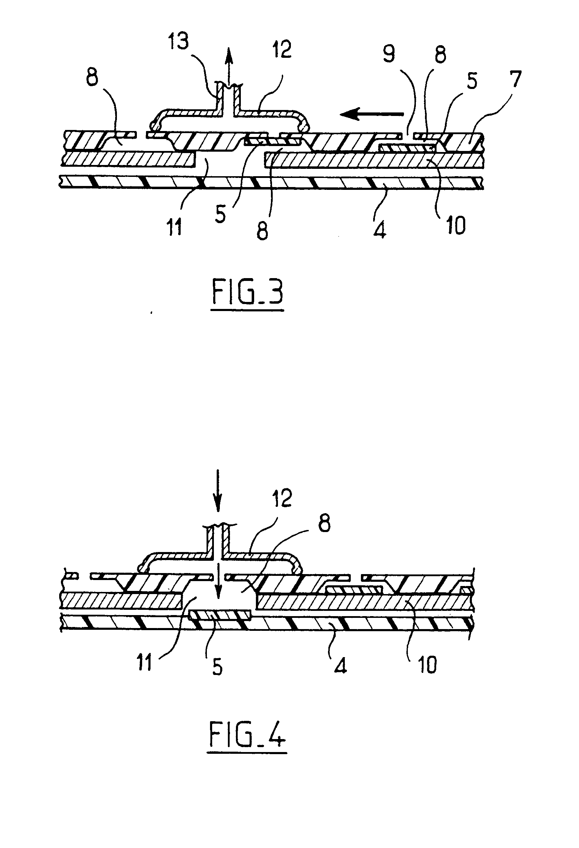

Chaque organe de pose 6 comporte une plaque de positionnement 10 s'étendant transversalement au dessus de la couche fibreuse humide 4, et percée d'une ouverture 11 à l'emplacement où une puce électronique 5 doit être déposée sur la couche fibreuse humide 4. A l'aplomb de ce même emplacement l'organe de pose comporte une cloche 12 espacée de la plaque de positionnement 10 d'une distance juste suffisante pour permettre le passage de la bande porteuse 7 entre la plaque de positionnement 10 et la cloche 12. La cloche 12 est équipée d'un conduit 13 pouvant alternativement être relié à un dispositif d'aspiration et un dispositif de soufflage non représentés. Lors de la mise en route de l'installation une bande d'amorce de la bande porteuse 7 est glissée entre la plaque de positionnement 10 et la cloche 12 et est accrochée à un axe 14 (figure 1) entraîné en rotation pour exercer une traction sur la bande porteuse 7. Pour une meilleure clarté du dessin, la bobine 10 et l'axe d'enroulement 14 d'un seul organe de pose 6 ont été représentés sur la figure 1. Lorsque la bande porteuse 7 est mise en place les alvéoles 8 sont ouvertes et sont disposées avec l'ouverture d'éjection en contact avec la plaque de positionnement 10. La puce électronique 5 repose alors sur la plaque de positionnement 10 comme illustré sur la partie droite de la figure 3. Lorsqu'une alvéole atteint la cloche 12 celle-ci est tout d'abord reliée au dispositif d'aspiration pour plaquer la puce électronique 5 dans le fond de l'alvéole 8 comme illustré sur la partie médiane de la figure 3. Lorsque l'alvéole 8 est à l'aplomb de l'orifice de positionnement de la plaque de positionnement 10 la cloche 12 est reliée au dispositif de soufflage et la puce électronique 5 est projetée sur la surface supérieure de la couche fibreuse humide 4 comme illustré sur la figure 4. En fonction de la pression de soufflage et de la densité des fibres de la couche fibreuse humide 4 la puce électronique 5 est simplement déposée sur la surface supérieure de la couche fibreuse humide 4 ou enfoncée sur celle-ci. Bien entendu la vitesse d'avance de la bande porteuse 7 et la mise en communication de la cloche 12 avec le dispositif d'aspiration ou le dispositif de soufflage sont synchronisés avec la vitesse de déplacement de la couche fibreuse humide 4 afin de déposer les puces électroniques 5 aux emplacements souhaités.

Dans ce premier mode de mise en oeuvre la première couche fibreuse humide 4 est ensuite recouverte par une seconde couche fibreuse humide 15 réalisée à partir d'une cuve séparée et acheminée de façon connue en soi au moyen d'une bande transporteuse 16 contre laquelle elle est plaquée par aspiration. Les puces 5 sont ainsi emprisonnées entre les deux couches qui sont acheminées vers une installation de pressage et de séchage 17 destinée à mettre en oeuvre de façon connue en soi les étapes de finalisation de la feuille de papier.

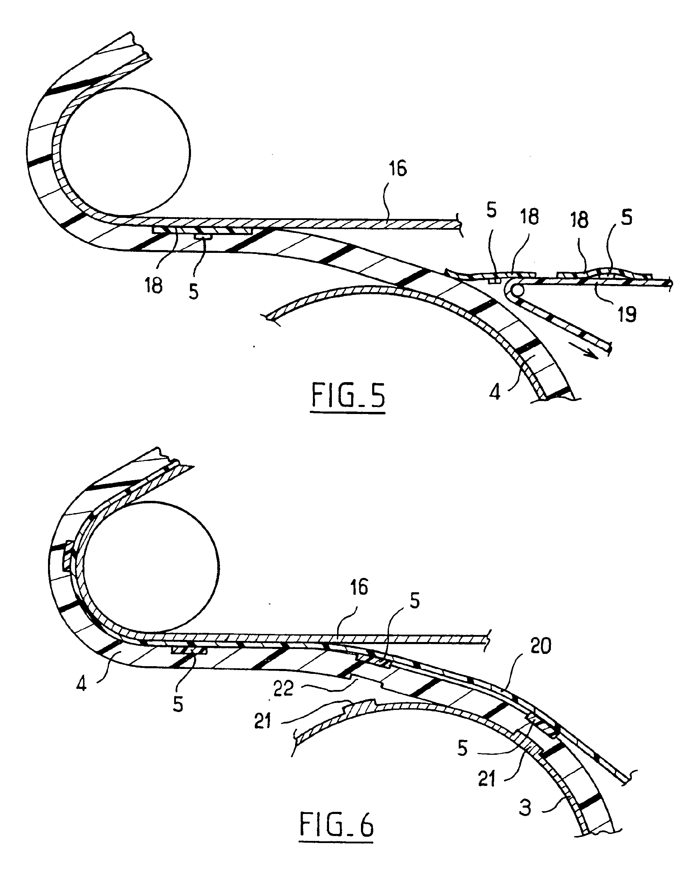

La figure 5 illustre un second mode de mise en oeuvre du procédé de son invention dans lequel les puces 5 sont initialement conditionnées en les associant à un timbre 18 qui est ensuite fixé de façon détachable, par exemple au moyen d'une colle sensible à la pression, sur une bande porteuse 19. Dans ce mode de mise en oeuvre le timbre 18 et la puce électronique 5 qui lui est associée sont déposés sur la couche fibreuse humide 4 en faisant subir à la bande porteuse 19 un parcours en épingle à cheveux qui assure un détachement du timbre 18 et une mise en porte à faux de celui-ci pour être déposé sur la couche fibreuse humide 4 comme illustré par la figure 5. Dans le mode de mise en oeuvre illustré, la couche fibreuse humide 4 n'est pas associée à une seconde couche fibreuse humide de sorte que le timbre 18 affleurera l'une des faces de la feuille de papier. Dans ce cas le timbre 18 comporte de préférence sur sa face en contact avec la couche fibreuse humide 4 une colle activable lors de l'opération de séchage du papier. Ce mode de mise en oeuvre permet d'utiliser une puce sans antenne, l'antenne étant réalisée soit sur le timbre 18 préalablement à une mise en place de la puce électronique 5 sur le timbre, soit par une impression après la finalisation de la feuille de papier.

La figure 6 illustre un troisième mode de mise en oeuvre selon lequel les puces 5 sont portées par un ruban 20 qui est déposé sur la couche fibreuse humide 4 en même temps que la puce électronique 5 correspondante. Dans le mode de mise en oeuvre illustré la forme 3 est en outre pourvue d'empreintes 21 en relief par rapport à la surface externe de la forme 3 pour former dans la couche fibreuse humide 4 des cavités 22 opposées à l'emplacement de pose des puces électroniques 5. Lors du transfert de la couche fibreuse humide 4 vers la bande transporteuse 16 la pression exercée sur la puce électronique 5 déplace les fibres de la couche fibreuse humide 4 vers la cavité 22 qui disparaît alors en permettant l'encastrement des puces électroniques 5 dans la couche fibreuse humide 4 sans augmentation de la densité des fibres à l'aplomb des puces électroniques 5. On s'assure ainsi que la feuille finale ne comporte aucune surépaisseur même dans le cas d'une couche fibreuse humide 4 à forte densité de fibres.

Bien entendu, l'invention n'est pas limitée au mode de mise en oeuvre décrit et on peut y apporter des variantes de réalisation sans sortir du cadre de l'invention tel que défini par les revendications. En particulier bien que l'invention ait été décrite en relation avec trois exemples d'organes de pose des puces électroniques 5 sur la couche fibreuse humide 4, ces exemples ne sont pas limitatifs et le procédé selon l'invention pourrait être mise en oeuvre avec d'autres organes de pose, par exemple en utilisant un robot de prélèvement et de pose équipé d'un bras exerçant sur les puces électroniques au moment de leur pose une pression adaptée à l'enfoncement souhaité des puces électroniques dans la couche fibreuse humide, le cas échéant pour obtenir un affleurement de la puce.

Chacun de ses modes de réalisation décrits peut être mis en oeuvre avec une seule couche ou avec deux couches.

De même bien que la réalisation d'empreintes en relief sur la forme ait été décrite uniquement en relation avec le troisième mode de mise en oeuvre, des empreintes analogues pourront être utilisées en relation avec les autres modes de mise en oeuvre décrits. En outre dans le cas d'une mise en oeuvre avec une deuxième couche fibreuse humide celle-ci peut également être réalisée avec une forme équipée d'empreintes en relief pour réaliser des cavités qui viennent en regard des puces électroniques lors du recouvrement de la première couche fibreuse humide par la seconde couche fibreuse humide

Dans le cas d'un timbre porteur ou d'un ruban porteur celui-ci peut être soit perméable si l'on souhaite qu'une imbrication de fibres puisse se faire, soit être au contraire imperméable si l'on souhaite que la surface du timbre ou du ruban reste lisse en particulier dans le cas où le timbre ou le ruban affleure la surface du papier après les étapes de finalisation.

Bien que dans le premier mode de mise en oeuvre il ait été prévu une pose des puces électroniques 5 par aspiration puis soufflage on peut simplement assurer une pose par gravité lorsqu'une alvéole 8 est en coïncidence avec l'ouverture 11 de la plaque de positionnement. Dans ce cas la bande 7 ne comporte pas d'orifice 9 et la cloche 12 est supprimée.

## Revendications

1. Procédé d'insertion de puces électroniques (5) dans une feuille de matière fibreuse, ce procédé comportant une étape de formation d'au moins une première couche fibreuse humide (4) à partir d'un bain (2) de fibres en suspension dans un liquide, et des étapes de finalisation (17) de la feuille **caractérisées en ce qu'**il comporte en outre une étape de pose des puces électroniques (5) sur la première couche fibreuse humide (4) après formation complète de celle-ci et avant les étapes de finalisation.

2. Procédé selon la revendication 1 **caractérisé en ce que** lors de l'étape de pose les puces électroniques sont enfoncées dans la première couche fibreuse (4).

3. Procédé selon la revendication 1 **caractérisé en ce qu'**il comporte en outre une étape de recouvrement de la première couche fibreuse humide (4) par une seconde couche fibreuse humide (15) après la pose des puces électroniques et avant les étapes de finalisation.

4. Procédé selon la revendication 1 **caractérisé en ce que** les puces électroniques (5) sont portées par une bande porteuse (7) comportant des alvéoles (8).

5. Procédé selon la revendication 4 **caractérisé en ce que** les puces électroniques sont tout d'abord maintenues dans les alvéoles par aspiration puis déposées par soufflage.

6. Procédé selon la revendication 4 **caractérisé en ce que** les puces électroniques sont déposées à partir des alvéoles par gravité.

7. Procédé selon la revendication 1 **caractérisé en ce que** les puces électroniques (5) sont portées par un support (18,20) qui est déposé sur la première couche fibreuse humide (4) en même temps que les puces électroniques (5).

8. Procédé selon la revendication 7 **caractérisé en ce que** les puces électroniques sont portées par des timbres (18).

9. Procédé selon la revendication 7 **caractérisé en ce que** le support des puces électroniques est un ruban (20).

10. Procédé selon la revendication 1 **caractérisé en ce que** lors de l'étape de formation de la première couche fibreuse humide (4) des cavités (22) sont réalisées dans la première couche fibreuse humide (4) à l'aplomb des emplacements des puces électroniques (5).

11. Procédé selon la revendication 3 **caractérisé en ce que** la seconde couche fibreuse humide (15) comporte des cavités venant en regard des puces électroniques lors du recouvrement.

## Patentansprüche

1. Verfahren zum Einfügen von elektronischen Chips (5) in eine Bahn aus Fasermaterial, wobei dieses Verfahren einen Schritt der Bildung mindestens einer ersten feuchten Faserschicht (4) aus einem Bad (2) von Fasern in Suspension in einer Flüssigkeit und Schritte (17) der Fertigstellung der Bahn umfasst, **dadurch gekennzeichnet, dass** es ferner einen Schritt des Anbringens der elektronischen Chips (5) auf der ersten feuchten Faserschicht (4) nach deren vollständiger Bildung und vor den Fertigstellungsschritten umfasst.

2. Verfahren nach Anspruch 1, **dadurch gekennzeichnet, dass** während des Schritts des Anbringens die elektronischen Chips in die erste Faserschicht (4) hineingedrückt werden.

3. Verfahren nach Anspruch 1, **dadurch gekennzeichnet, dass** es ferner einen Schritt des Abdeckens der ersten feuchten Faserschicht (4) durch eine zweite feuchte Faserschicht (15) nach dem Anbringen der elektronischen Chips und vor den Fertigstellungsschritten umfasst.

4. Verfahren nach Anspruch 1, **dadurch gekennzeichnet, dass** die elektronischen Chips (5) von einem Zellen (8) umfassenden Trägerband (7) getragen werden.

5. Verfahren nach Anspruch 4, **dadurch gekennzeichnet, dass** die elektronischen Chips zunächst durch Ansaugung in den Zellen gehalten und daraufhin durch einen Blasvorgang aufgebracht werden.

6. Verfahren nach Anspruch 4, **dadurch gekennzeichnet, dass** die elektronischen Chips aus den Zellen heraus durch Schwerkraft aufgebracht werden.

7. Verfahren nach Anspruch 1, **dadurch gekennzeichnet, dass** die elektronischen Chips (5) von einem Träger (18, 20) getragen werden, der auf die erste feuchte Faserschicht (4) gleichzeitig mit den elektronischen Chips (5) aufgebracht wird.

8. Verfahren nach Anspruch 7, **dadurch gekennzeichnet, dass** die elektronischen Chips von Stempeln (18) getragen werden.

9. Verfahren nach Anspruch 7, **dadurch gekennzeichnet, dass** der Träger für die elektronischen Chips ein Band (20) ist.

10. Verfahren nach Anspruch 1, **dadurch gekennzeichnet, dass** während des Schritts der Bildung der ersten feuchten Faserschicht (4) Hohlräume (22) in der ersten feuchten Faserschicht (4) in senkrechter Flucht mit den Stellen für die elektronischen Chips (5) ausgebildet werden.

11. Verfahren nach Anspruch 3, **dadurch gekennzeichnet, dass** die zweite feuchte Faserschicht (15) Hohlräume umfasst, die während des Abdeckens den elektronischen Chips gegenüberliegend angeordnet sind.

## Claims

1. Method of inserting microchips (5) into a sheet of fibrous material, said method including a step of forming at least a first wet fibrous layer (4) from a bath (2) of fibres in suspension in a liquid and steps (17) of finalizing the sheet, **characterized in that** it further includes a step of placing the microchips (5) on the first wet fibrous layer (4) after complete formation of the latter and before the finalization steps.

2. Method according to claim 1 **characterized in that** during the laying step the chips are pressed into the first fibrous layer (4).

3. Method according to claim 1 **characterized in that** it further includes a step of covering the first wet fibrous layer (4) with a second wet fibrous layer (15) after placing the chips and before the finalization steps.

4. Method according to claim 1 **characterized in that** the microchips (5) are carried by a carrier tape (7) including cells (8).

5. Method according to claim 4 **characterized in that** the microchips are at first retained in the cells by suction and then deposited by blowing.

6. Method according to claim 4 **characterized in that** the microchips are deposited from the cells by gravity.

7. Method according to claim 1 **characterized in that** the microchips (5) are carried by a support (18, 20) that is deposited on the first wet fibrous layer (4) at the same time as the chips (5).

8. Method according to claim 7 **characterized in that** the microchips are carried by stamps (18).

9. Method according to claim 7 **characterized in that** the microchip support is a tape (20).

10. Method according to claim 1 **characterized in that** during the step of forming the first wet fibrous layer (4) cavities (22) are formed in the first wet fibrous layer (4) directly above the locations of the microchips (5).

11. Method according to claim 3 **characterized in that** the second wet fibrous layer (15) includes cavities placed opposite the microchips during the covering step.
